# EUROPEAN PATENT SPECIFICATION

(11) **EP 1 097 862 B1**
(45) Date of publication and mention of the grant of the patent: **01.06.2005**
(21) Application number: 00123804.7
(22) Date of filing: 02.11.2000
(51) Int. Cl.: B62J 1/16

(54) **Reclining saddle for bicycles**
Neigbarer Sattel für Fahrräder
Siège inclinable pour bicyclettes

(30) Priority: 04.11.1999 IT MO990245
(43) Date of publication of application: 09.05.2001
(73) Proprietor: Bellelli, Tiziano, 45030 San Martino di Venezze RO (IT)
(72) Inventor: Bellelli, Tiziano, 45030 San Martino di Venezze RO (IT)
(74) Representative: Modiano, Guido, Dr.-Ing.

(56) References cited:
- EP-A- 0 832 811
- EP-A- 0 987 171

## Description

The invention concerns: a reclining saddle for bicycles, that is, a device that can accommodate a child which may be attached to the frame of a bicycle, the said saddle being equipped with an improved reclining mechanism.

A reclining saddle according to the preamble of claim 1 is shown for example in EP-A-0 832 811.

The state of the art comprises various types of reclining saddles for bicycles, mainly consisting of devices for reclining just the backrest hinged at the base or for reclining the entire unit, seat, backrest and footrest, by reclining around an axis of rotation positioned in proximity to the mechanism; in this last type the adjustment of the position is achieved by means of a threaded extensible rod, with control knob at the upper end that varies the length of the corresponding positioning arm with respect to the said axis of rotation, causing it to recline. Moreover, the said completely adjustable saddle moves the weight of the child backwards, when reclined, which for the cyclist can be awkward, making it more difficult to balance the bicycle; state of the art saddles resolve this by enabling a horizontal adjustment of the entire saddle, which allows the weight of the child to brought back to the previous position.

The adjustment of the angle, as said, is achieved in a number of phases and is difficult to perform, particularly if the child is on the saddle.

Such prior art may be subject to considerable improvement as regards the possibility of adjusting the inclination of the saddle complete with footrests in such a way that the position of the mass of the child is not changed and of making the operation easier to perform.

From the foregoing emerges the need to resolve the technical problem of inventing a movement for the inclination of the entire saddle that allows the operation to be carried out with one hand, even with the child on the saddle, and which maintains the position of the mass of the said child.

EP-A-0 832 811 discloses a bicycle baby-seat comprising an anatomically-shaped structure and adjustable support means adapted to arrange and lock the supporting structure both in a substantially upright operating setting and in at least one second reclined operating setting. In one embodiment of the adjustable support means, said means comprise one base guide and a counter guide sliding member integral with the first portion of the seat body slidably engaged with the base guide. Both the base guide and the sliding member having a curved conformation.

The invention resolves the said technical problem by adopting a reclining saddle for bicycles according to claim 1.

In a further embodiment: said locking device consisting of a lever hinged on the mobile part and which is pushed by an elastic element so that it inserts at least one tooth, with which it is equipped, into at least one cavity present on a protuberance present on the part which is attached to the bicycle.

In a further embodiment: said frontal coupling positioned between the extremity of the said pin and a protuberance on the slide or guide opposite to the slide or guide to which the pin is hinged.

Adopting, in a further embodiment: the said frontal coupling positioned between one of the parts attached to the said pin, pinion or control knob, and the slide or guide on which it is hinged.

Adopting, in a further embodiment: the said locking device consisting of an elastic element positioned between the said pin, or part attached to it, and the slide or guide on which the said pin is hinged.

Adopting, finally, in a further embodiment: the said elastic element consisting of a helical spring coaxial with the said pin.

The advantages obtained with the present invention are: the reclining movement of the saddle without moving the centre of gravity of the mass of the child with respect to the frame of the bicycle, thereby the cyclist does not note any difference in the balancing between the upright position and the reclined position of the saddle; furthermore, the movement may be achieved using a single hand of the user, whilst with the other it is possible to hold the bicycle.

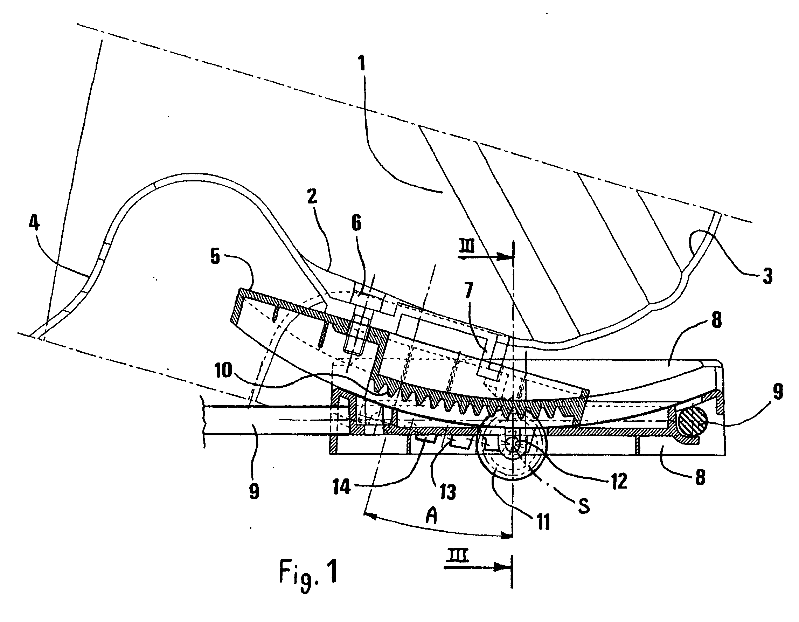

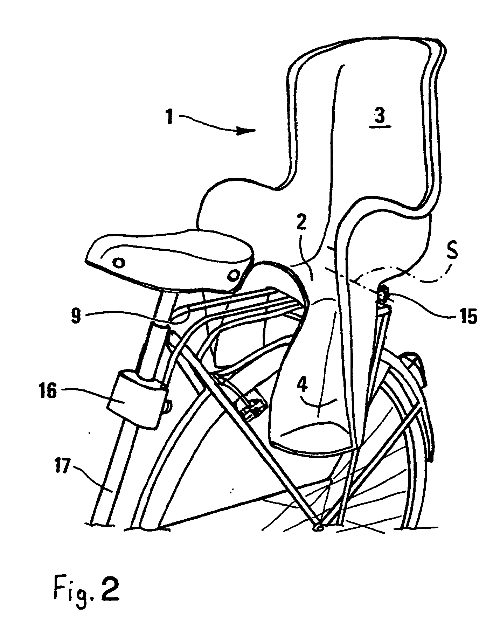

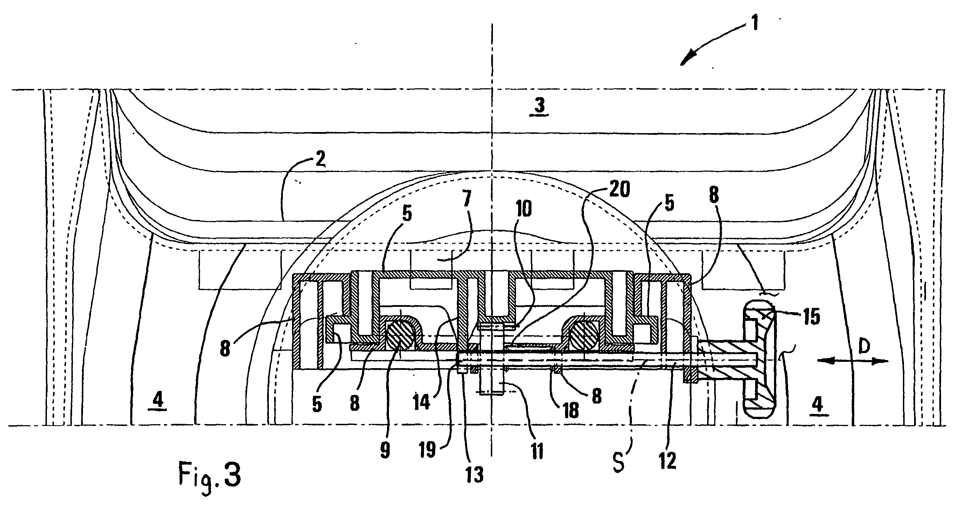

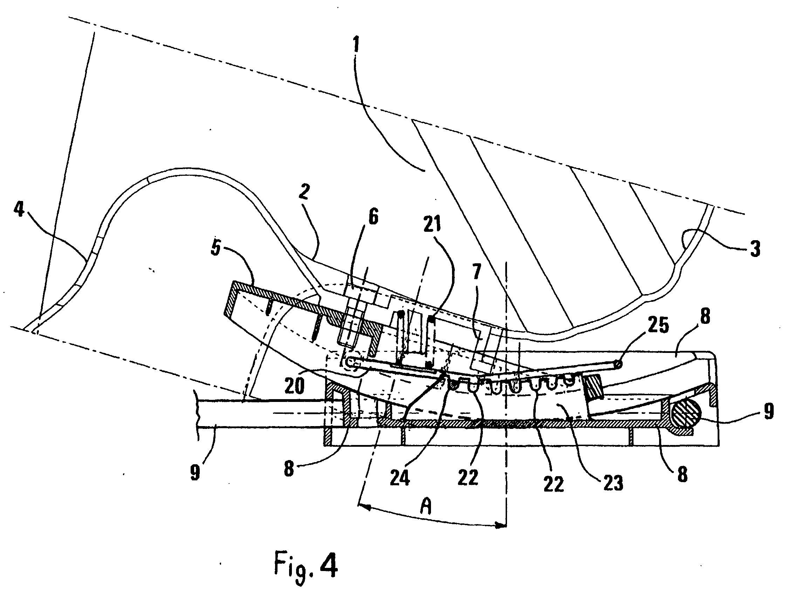

An embodiment of the invention is illustrated, purely by way of example, in the four tables of drawings attached in which: Figure 1 is a longitudinal section limited to the reclining device of the bicycle saddle; Figure 2 is a prospective drawing of the saddle as described in the invention mounted on a bicycle; Figure 3 is transverse section III-III of Figure 1, limited to the reclining device; Figure 4 is a partial longitudinal section of a different control for the reclining device for the saddle for bicycles.

Figure 1, shows the reclining saddle with seat 2, backrest 3 and footrests 4; said saddle is fixed to an arched slide 5 by means of screws 6 and teeth 7; said slide is coupled to a guide 8, also arched, fixed rigidly to the support tube 9 fixed to the frame of the bicycle; the centre of curvature of said slide and guide is very close to the centre of gravity of the mass of the child, when seated on the saddle, and is positioned at the intersection of the axes of the extremities of arc A, in reference number said Figure which represents one of the possible inclinations; reference number 10 corresponds to a section of gearwheel forming part of or rigidly fixed to said arched slide 5, on which meshes pinion 11 splined on pin 12 defining the actuator axis S of the device; reference number 13 corresponds to cavities, in which the extremity of said pin 12 is inserted, located in a portion 14 of said slide 5.

Figure 2 shows the control knob 15 splined on the said pin 12, to control the reclining movement; reference number 16 corresponds to prior art locking device to fix said tubes 8 to the frame of the bicycle 17; reference number 18, shown in figure 3, corresponds to the helical spring wound on said pin and acting between said pin 12 and the guide 8, to maintain the inserted position of the extremity 19 of the pin in one of the cavities 13; reference number 20 corresponds to an opening to limit the axial movement D of the pin 12, during which the pinion 11 remains adequately meshed in the said section of gearwheel 10 to enable the inclination by rotating the said knob 15; reference number 20 shown in Figure 4, corresponds to the lever for locking the movement, hinged to slide 5 and placed in contact with spring 21, which presses it against the cavities 22, located on protuberance 23 of the guide 8; reference number 24 corresponds to the tooth of the lever which is inserted in said cavities; reference number 25 corresponds to the handle of the lever.

Operation of the device for reclining the saddle 1 is achieved by the axial movement the knob 15 outward, extracting the extremity 19 of the pin from the cavity in which it is positioned, and by rotating the knob in the desired direction, either increasing or decreasing the angle of inclination. Having found the best position for the child, the knob is released and the spring pushes the said extremity into the corresponding cavity 13, locking the rotation of the slide 5, and consequently of the saddle 1, on the guide 8.

The extremity 19 of the pin 12 acts with frontal coupling in the slide 5. Moreover, the said coupling device, the cavities 13 and extremity 19 of the pin, may advantageously be replaced with other types of frontal coupling, for example between the pinion 11 and the walls of the opening 20 or on the shoulder of the said knob 15 against the side of the guide 8.

Operation of the lever for adjusting the inclination of the saddle is as described above with the difference that the operator grips the handle 25 of the lever 20: the lever is lifted, thereby extracting the tooth 24 from the corresponding cavity 22, the handle is then either pushed or pulled; the saddle 1 is easily inclined in that the operator acts along the tangent of curvature of guide/slide; once the desired position has been reached the operator releases the lever and the tooth 24, under the action of the spring 21, enters securely in the corresponding cavity 22.

Although less advantageous, the spring 18 may be replaced by a locking element for the axial movement of the said pin 12. Also, the respective positions of the section 10 of gearwheel and the pinion 11 with corresponding pin 12 may be inverted, achieving the same inclination and operation with the pin 12 that moves with the saddle 1: the operator may still effect the inclination with one hand; the only difference from the embodiment illustrated is the movement of the pin with the saddle and therefore of the control knob 15. In this case the frontal coupling may also be achieved between the parts splined onto the pin 12, pinion 11 or knob 15, and the moving slide.

Finally, the arched slide 5 and the guide 8 are indifferently one male the other female or vice versa.

## Claims

1. A reclining saddle for bicycles (1), comprising
a device for reclining the entire seat (2), backrest (3) and footrest (4),
means (9; 16) for attaching and supporting said device to a frame (17) of the bicycle,
said reclining device consisting of an arched slide (5), rigidly connected to the saddle (1) and movable in a correspondingly arched guide (8) which is fixed to said means (9;16), either said arched slide (5) or said arched guide (8) being indifferently equipped with a positioning device (10, 11, 12; 20, 22, 24) consisting of a locking device with external manual control,
**characterized in that** said locking device is a gear coupling consisting of a section of gearwheel (10) and a pinion (11) meshing with it; said pinion (11) being splined on a pin (12), said pin (12) being rotatable and movable in an axial direction actuated by an operator, while said pinion (11) remaining meshed with said section (10); said pin (12), or other part attached to it, being associated with a frontal coupling (13, 19) on the arched guide (8) or said arched slide (5), to prevent free rotation; locking means (18) preventing the axial movement of the pin (12) when not operated by the operator.

2. Saddle, as claimed in claim 1, **characterized in that** said frontal coupling (13, 19) is positioned between the extremity (19) of said pin (12) and a protuberance (14) on the slide or guide (5; 8) opposite to the slide or guide (5; 8) to which the pin (12) is hinged.

3. Saddle, as claimed in claim 1, **characterized in that** said frontal coupling (13, 19) is positioned between one of the parts attached to said pin (12), pinion (11) or control knob (15), and the slide or guide (5; 8) on which the pin (12) is hinged.

4. Saddle as claimed in one of the previous claims 1 to 3, **characterized in that** said locking device consists of an elastic element (18) positioned between said pin (12), or part attached to it (11), and the slide or guide (5; 8) on which said pin (12) is hinged.

5. Saddle as claimed in the previous claim, **characterized in that** said elastic element consists of a helical spring (18) coaxial with said pin (12).

## Patentansprüche

1. Ein neigbarer Sattel für Fahrräder (1), umfassend:
eine Vorrichtung zum Neigen der Gesamtheit aus Sitz (2), Rückenlehne (3) und Fußstütze (4),
Halterungen (9; 16) zum Befestigen und Stützen der Vorrichtung an einem Rahmen (17) des Fahrrades,
die Neigevorrichtung, bestehend aus einem bogenförmigen Schlitten (5), der mit dem Sattel (1) starr verbunden und in einer an den Halterungen (9; 16) befestigten,
entsprechend gebogenen Führung (8) beweglich angeordnet ist, wobei entweder der bogenförmige Schlitten (5) oder die bogenförmige Führung (8) gleichermaßen mit einer Positioniervorrichtung (10, 11, 12; 20, 22, 24), bestehend aus einer Arretiervorrichtung mit externer manueller Betätigung, versehen ist,
**dadurch gekennzeichnet, dass** die Arretiervorrichtung eine Zahnkupplung ist, bestehend aus einem Abschnitt eines Zahnrades (10) und einem in diesen eingreifenden Ritzel (11); wobei das Ritzel (11) durch Längsverzahnung auf einem Stift (12) befestigt ist, der Stift (12) durch einen Bediener drehbar und in axialer Richtung beweglich ist, während das Ritzel (11) mit dem Abschnitt (10) im Eingriff bleibt; wobei der Stift (12) oder ein anderes daran befestigtes Teil mit einer vorderen Kupplung (13, 19) auf der bogenförmigen Führung (8) oder auf dem bogenförmigen Schlitten (5) verbunden ist, um eine freie Drehung zu verhindern; wobei die Arretiervorrichtung (18) die axiale Bewegung des Stiftes (12) verhindert, wenn er nicht vom Bediener betätigt wird.

2. Sattel gemäß Anspruch 1, **dadurch gekennzeichnet, dass** die vordere Kupplung (13, 19) zwischen dem Ende (19) des Stiftes (12) und einem Vorsprung (14) auf dem Schlitten oder auf der Führung (5; 8) gegenüber dem Schlitten oder der Führung (5; 8) angeordnet ist, in welchem/welcher der Stift (12) schwenkbar gelagert ist.

3. Sattel gemäß Anspruch 1, **dadurch gekennzeichnet, dass** die vordere Kupplung (13, 19) zwischen einem der Teile, die an dem Stift (12) befestigt sind, Ritzel (11) oder Betätigungsgriff(15), und dem Schlitten oder der Führung (5; 8) angeordnet ist, in welchem/welcher der Stift (12) schwenkbar gelagert ist.

4. Sattel gemäß einem der vorigen Ansprüche 1 bis 3, **dadurch gekennzeichnet, dass** die Arretiervorrichtung aus einem elastischen Element (18) besteht, das zwischen dem Stift (12), oder einem daran befestigten Teil (11), und dem Schlitten oder der Führung (5; 8) angeordnet ist, in welchem/welcher der Stift (12) schwenkbar gelagert ist.

5. Sattel gemäß dem vorigen Anspruch, **dadurch gekennzeichnet, dass** das elastische Element aus einer mit dem Stift (12) koaxialen Schraubenfeder (18) besteht.

## Revendications

1. Siège inclinable pour bicyclettes (1), comprenant
un dispositif pour incliner l'ensemble assise (2), dossier (3) et repose-pieds (4), un moyen (9 ; 16) pour soutenir et fixer ledit dispositif à un cadre (17) de la bicyclette,
ledit dispositif inclinable consistant en une coulisse courbée (5), rigidement raccordée au siège (1) et déplaçable dans un guide (8) courbé de façon correspondante qui est fixé audit moyen (9 ; 16), soit ladite coulisse courbée (5), soit ledit guide courbé (8) étant indifféremment équipé d'un dispositif de positionnement (10, 11, 12, 20, 22, 24) consistant en un dispositif de verrouillage avec contrôle externe manuel,
**caractérisé en ce que** ledit dispositif de verrouillage est un accouplement à denture consistant en un secteur de roue dentée (10) et un pignon (11) engrenant avec celui-ci ; ledit pignon (11) étant cannelé sur un axe (12), ledit axe (12) pouvant tourner et se déplacer dans une direction axiale actionnée par un opérateur, alors que ledit pignon (11) reste engrené avec ledit secteur (10) ; ledit axe (12), ou toute autre partie qui y est attachée, étant associé à un accouplement frontal (13, 19) sur le guide courbé (8) ou sur ladite coulisse courbée (5), pour empêcher une rotation libre ; des moyens de verrouillage (18) empêchant le mouvement axial de l'axe (12) lorsqu'il n'est pas actionné par l'opérateur.

2. Siège, comme revendiqué dans la revendication 1, **caractérisé en ce que** ledit accouplement frontal (13, 19) est positionné entre l'extrémité (19) dudit axe (12) et une protubérance (14) sur la coulisse ou le guide (5 ; 8) à l'opposé de la coulisse ou du guide (5 ; 8) dans lequel l'axe (12) pivote.

3. Siège, comme revendiqué dans la revendication 1, **caractérisé en ce que** ledit accouplement frontal (13, 19) est positionné entre l'une des parties attachées audit axe (12), audit pignon (11) ou à un bouton de commande (15), et la coulisse ou le guide (5 ; 8) dans lequel l'axe (12) pivote.

4. Siège, comme revendiqué dans l'une des revendications précédentes 1 à 3, **caractérisé en ce que** ledit dispositif de verrouillage consiste en élément élastique (18) positionné entre ledit axe (12), ou une partie attachée à celui-ci (11), et la coulisse ou le guide (5 ; 8) dans lequel ledit axe (12) pivote.

5. Siège, comme revendiqué dans la revendication précédente, **caractérisé en ce que** ledit élément élastique consiste en un ressort hélicoïdal (18), qui est coaxial avec ledit axe (12).
